# FASCICULE DE BREVET EUROPEEN

(11) **EP 4 428 430 B1**
(45) Date de publication et mention de la délivrance du brevet: **07.05.2025**
(21) Numéro de dépôt: 24157762.6
(22) Date de dépôt: 15.02.2024
(51) Int. Cl.: F17C 13/00

(54) **RÉSERVOIR COMPRENANT DES ENCEINTES INTERNE ET EXTERNE AINSI QU AU MOINS UN SYSTÈME DE LIAISON LINÉAIRE ANNULAIRE RELIANT LESDITES ENCEINTES**
TANK MIT INNEN- UND AUSSENRÄUMEN SOWIE MINDESTENS EINEM RINGFÖRMIGEN LINEAREN VERBINDUNGSSYSTEM ZUR VERBINDUNG DIESER BEHÄLTER
TANK COMPRISING INNER AND OUTER ENCLOSURES AND AT LEAST ONE ANNULAR LINEAR CONNECTION SYSTEM CONNECTING SAID ENCLOSURES

(30) Priorité: 10.03.2023 FR 2302237
(43) Date de publication de la demande: 11.09.2024
(73) Titulaire: AIRBUS OPERATIONS (S.A.S.), 31060 Toulouse (FR)
(72) Inventeur: GALLARDO, Julien, 31060 Toulouse Cedex 9 (FR); BELLET, Daniel, 31060 Toulouse Cedex 9 (FR); LOYANT, François, 31060 Toulouse Cedex 9 (FR)
(74) Mandataire: Airbus-OPS SAS

(56) Documents cités:
- EP-A1- 3 366 568
- CN-A- 110 566 802
- FR-A1- 3 064 043
- NL-A- 8 801 044
- US-A1- 2014 166 662
- US-A1- 2017 130 900

## Description

La présente demande se rapporte à un réservoir comprenant des enceintes interne et externe ainsi qu'au moins un système de liaison linéaire annulaire reliant lesdites enceintes.

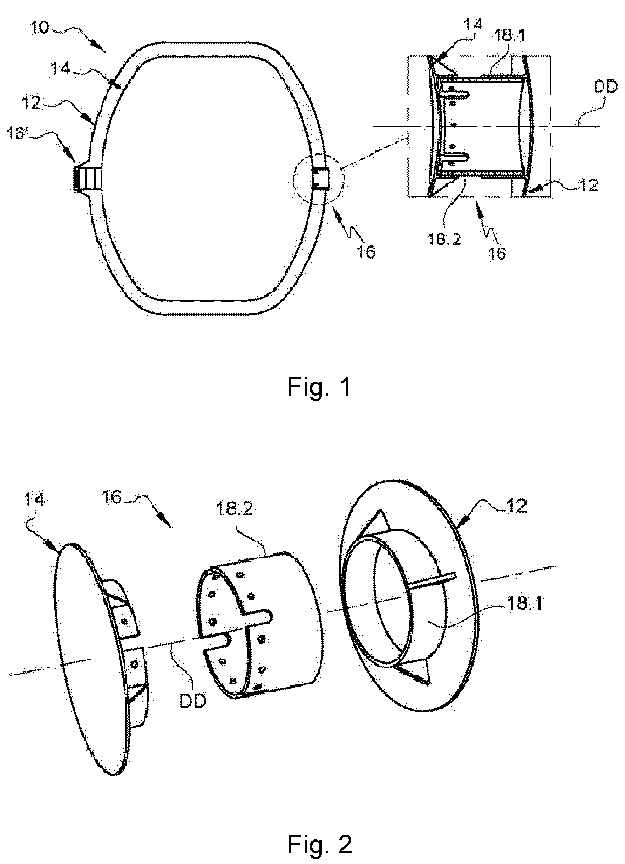

Dans un mode de réalisation selon l'art antérieur visible sur la figure 1, un réservoir à hydrogène 10 comprend une enceinte externe 12, une enceinte interne 14 positionnée dans l'enceinte externe 12, une isolation thermique entre les enceintes externe et interne 12, 14 ainsi que deux systèmes de liaison 16, 16' diamétralement opposés reliant les enceintes externe et interne 12, 14. En fonctionnement, en raison de la température de stockage de l'hydrogène à l'état cryogénique, l'enceinte interne 14 se contracte beaucoup plus que l'enceinte externe 12. Par conséquent, au moins un des deux systèmes de liaison 16 est configuré pour autoriser un déplacement de l'enceinte interne 14 par rapport à l'enceinte externe 12 selon une direction longitudinale parallèle à un axe de déplacement DD. Généralement, un premier système de liaison 16' (celui de gauche sur la figure 1) est rigide et ne permet aucun mouvement relatif entre les enceintes externe et interne 12, 14 alors qu'un deuxième système de liaison 16 (celui de droite sur la figure 1) autorise un mouvement relatif entre les enceintes externe et interne 12, 14 selon la direction longitudinale.

Comme illustré sur les figures 1 et 2, le deuxième système de liaison 16 comprend un manchon femelle 18.1 solidaire de l'enceinte externe 12 ainsi qu'un manchon mâle 18.2 relié à l'enceinte interne 14 par une liaison rigide et configuré pour coulisser dans le manchon femelle 18.1. Ces deux manchons femelle et mâle 18.1, 18.2 présentent respectivement des surfaces cylindriques intérieure et extérieure coaxiales qui ont des axes confondus avec l'axe de déplacement DD et sensiblement le même diamètre. Ces deux manchons femelle et mâle 18.1, 18.2 forment ainsi une liaison de type pivot glissant.

Ce mode de réalisation n'est pas pleinement satisfaisant en raison des risques de coincement causés par les frottements entre les manchons femelle et mâle 18.1, 18.2 ainsi qu'en raison du caractère aléatoire des contacts entre les manchons femelle et mâle 18.1, 18.2.

Le document US 2017 / 130900 A1 décrit un réservoir comprenant une enceinte externe, une enceinte interne, ainsi qu'un système de liaison selon l'art antérieur pour relier les enceintes externe et interne.

La présente invention vise à remédier à tout ou partie des inconvénients de l'art antérieur.

A cet effet, l'invention a pour objet un réservoir comprenant une enceinte externe, une enceinte interne positionnée dans l'enceinte externe ainsi qu'au moins un système de liaison reliant les enceintes externe et interne et leur permettant de se déplacer l'une par rapport à l'autre selon au moins une direction longitudinale parallèle à un axe de déplacement en fonctionnement.

Selon l'invention, le système de liaison comprend une liaison linéaire annulaire comportant une première surface de contact solidaire d'un premier élément parmi l'enceinte externe et l'enceinte interne ainsi qu'une deuxième surface de contact solidaire d'un deuxième élément, différent du premier élément, parmi l'enceinte externe et l'enceinte interne ; les première et deuxième surfaces de contact étant disposées en vis-à-vis et configurées pour être en contact l'une avec l'autre le long d'un cercle de contact qui présente un centre positionné sur l'axe de déplacement.

La liaison linéaire annulaire permet de limiter les risques de coincement et autorise un rotulage entre les première et deuxième surfaces de contact, ce qui tend à limiter les contraintes de flexion au niveau du système de liaison. Selon un autre avantage, le positionnement de la zone de contact entre les première et deuxième surfaces de contact n'est plus aléatoire.

Selon une autre caractéristique, la première surface de contact présente des sections longitudinales constantes autour de l'axe de déplacement et des sections transversales qui augmentent ou diminuent en s'écartant d'un plan transversal passant par le centre du cercle de contact, la deuxième surface de contact étant cylindrique et présentant un axe de révolution confondu avec l'axe de déplacement.

Selon une autre caractéristique, la première surface de contact présente des sections transversales supérieures ou égales à celles de la deuxième surface de contact et des sections transversales qui augmentent en s'écartant du plan transversal passant par le centre du cercle de contact.

Selon une autre caractéristique, le système de liaison comprend un premier manchon cylindrique et relié à l'enceinte externe ainsi qu'un deuxième manchon cylindrique et relié à l'enceinte interne, les premier et deuxième manchons étant coaxiaux à l'axe de déplacement et écartés l'un de l'autre de manière à délimiter un logement annulaire entre eux. En complément, le système de liaison comprend une bague positionnée dans le logement annulaire et immobile par rapport à un premier élément parmi les premier et deuxième manchons, la bague comportant la première surface de contact, un deuxième élément différent du premier élément, parmi les premier et deuxième manchons, comportant la deuxième surface de contact.

Selon une autre caractéristique, le deuxième manchon présente une surface extérieure, coaxiale à l'axe de déplacement, qui comporte une zone positionnée dans le premier manchon, ladite zone formant la deuxième surface de contact. Le premier manchon présente une surface intérieure comportant au moins un premier tronçon cylindrique, coaxial à l'axe de déplacement, positionné autour du deuxième manchon et présentant un diamètre intérieur. En complément, la bague comprend une surface extérieure cylindrique, de diamètre extérieur sensiblement égal au diamètre intérieur du premier tronçon du premier manchon, ainsi qu'une surface intérieure formant la première surface de contact.

Selon une autre caractéristique, le système de liaison comprend des première et deuxième butées reliées au premier manchon et positionnées de part et d'autre de la bague selon la direction longitudinale pour l'immobiliser en translation selon la direction longitudinale par rapport au premier manchon.

Selon une autre caractéristique, la deuxième butée, la plus éloignée de l'enceinte interne, est démontable.

Selon une autre caractéristique, la bague s'étend entre deux plans transversaux et présente un plan de symétrie équidistant des plans transversaux.

Selon une autre caractéristique, le premier manchon traverse l'enceinte externe et présente une première extrémité ouverte et située à l'intérieur de l'enceinte externe ainsi qu'une deuxième extrémité ouverte et située à l'extérieur de l'enceinte externe.

Selon une autre caractéristique, le système de liaison comprend un bouchon configuré pour se positionner au niveau de la deuxième extrémité du premier manchon et occuper un état monté dans lequel le bouchon obture la deuxième extrémité du premier manchon et un état démonté dans lequel le bouchon dégage la deuxième extrémité du premier manchon.

D'autres caractéristiques et avantages ressortiront de la description de l'invention qui va suivre, description donnée à titre d'exemple uniquement, en regard des dessins annexés parmi lesquels :
- La figure 1 est une représentation schématique d'un réservoir et d'un système de liaison illustrant un mode de réalisation de l'art antérieur,
- La figure 2 est une vue en perspective d'un système de liaison à l'état démonté illustrant un mode de réalisation de l'art antérieur,
- La figure 3 est une vue en perspective d'une partie d'un réservoir et d'un système de liaison illustrant un mode de réalisation de l'invention,
- La figure 4 est une coupe longitudinale d'une partie d'un réservoir et d'un système de liaison illustrant un mode de réalisation de l'invention,
- La figure 5 est une vue en perspective de la partie de réservoir et du système de liaison visibles sur la figure 4 en cours de montage,
- La figure 6 est une vue en perspective d'une bague segmentée illustrant un mode de réalisation de l'invention.

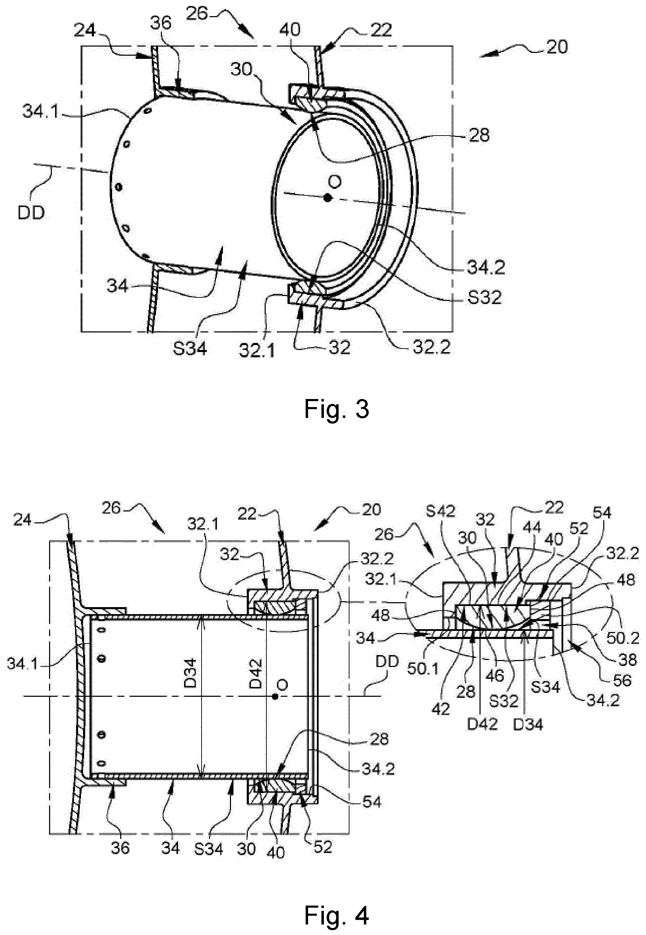

Selon un mode de réalisation visible sur les figures 3 à 5, un réservoir 20 comprend une enceinte externe 22, une enceinte interne 24 positionnée dans l'enceinte externe 22 ainsi que des premier et deuxième systèmes de liaison 26, diamétralement opposés, reliant les enceintes externe et interne 22, 24.

Selon une application, le réservoir 20 est adapté pour stocker de l'hydrogène à l'état cryogénique dans l'enceinte interne 24. Selon cette application, le réservoir 20 comprend une isolation thermique entre les enceintes externe et interne 22, 24.

Les enceintes externe et interne ainsi que l'isolation thermique ne sont pas plus décrites car elles peuvent être identiques à celles de l'art antérieur.

Selon une première configuration, le deuxième système de liaison est rigide et identique au système de liaison rigide de l'art antérieur. Selon une deuxième configuration, les premier et deuxième systèmes de liaison 26 sont identiques.

En fonctionnement, les enceintes externe et interne 22, 24 peuvent se déplacer l'une par rapport à l'autre selon une direction longitudinale parallèle à un axe de déplacement DD en raison des phénomènes de dilatation différents des enceintes externe et interne 22, 24.

Pour la suite de la description, un plan transversal est un plan perpendiculaire à l'axe de déplacement DD. Un plan longitudinal contient l'axe de déplacement DD.

Quel que soit le mode de réalisation, le réservoir comprend des enceintes externe et interne 22, 24 ainsi qu'au moins un système de liaison 26 reliant les enceintes externe et interne 22 et 24 et leur permettant de se déplacer l'une par rapport à l'autre selon au moins une direction longitudinale parallèle à un axe de déplacement DD en fonctionnement.

Seule une partie du réservoir 20, celle comportant le premier système de liaison 26, est représentée sur les figures 3 à 5.

Le système de liaison 26 comprend une première surface de contact 28 solidaire d'un premier élément parmi l'enceinte externe 22 et l'enceinte interne 24, une deuxième surface de contact 30 solidaire d'un deuxième élément, différent du premier élément, parmi l'enceinte externe 22 et l'enceinte interne 24, les première et deuxième surfaces de contact 28, 30 étant disposées en vis-à-vis et configurées pour être en contact l'une avec l'autre le long d'un cercle de contact qui présente un centre O positionné sur l'axe de déplacement DD. Les première et deuxième surfaces de contact 28, 30 sont positionnées entre deux plans transversaux décalés l'un par rapport à l'autre selon la direction longitudinale.

Ainsi, le système de liaison 26 comprend une liaison linéaire annulaire entre les enceintes externe et interne 22, 24 les immobilisant l'une par rapport à l'autre dans un plan transversal passant par le centre O et autorisant un mouvement de translation selon l'axe de déplacement DD ainsi qu'un rotulage autour du centre O entre les enceintes externe et interne 22, 24. Les première et deuxième surfaces de contact 28, 30 sont configurées pour être en contact l'une avec l'autre le long du cercle de contact en l'absence de rotulage. Lorsqu'un rotulage se produit, il peut en résulter une légère déformation du cercle de contact. Cette déformation est toutefois très limitée dans la mesure où un rotulage maximum envisagé est de l'ordre d'environ 1 degré.

Le fait de prévoir un système de liaison 26 comportant une liaison linéaire annulaire limite les risques de coincement et autorise un rotulage entre les première et deuxième surfaces de contact 28, 30, ce qui tend à limiter les contraintes de flexion au niveau du système de liaison 26. Selon un autre avantage, la zone de contact entre les première et deuxième surfaces de contact 28, 30 n'a plus un positionnement aléatoire. Cette zone de contact est toujours située au niveau d'un cercle de contact de centre O positionné sur l'axe de déplacement DD.

Selon un mode de réalisation, la première surface de contact 28 présente des sections longitudinales (dans des plans longitudinaux) constantes autour de l'axe de déplacement DD, en forme de U ou de V, et des sections transversales qui varient selon un sens, parmi une diminution des sections transversales ou une augmentation des sections transversales, en s'écartant d'un plan transversal passant par le centre O. La première surface de contact 28 est sensiblement symétrique par rapport à un plan transversal passant par le centre O.

En complément, la deuxième surface de contact 30 est cylindrique et présente un axe de révolution confondu avec l'axe de déplacement DD.

Selon un agencement, la première surface de contact 28 est positionnée à l'extérieur de la deuxième surface de contact 30 et présente des sections transversales supérieures ou égales à celles de la deuxième surface de contact 30. La première surface de contact 28 présente des sections transversales qui augmentent en s'écartant du plan transversal passant par le centre O.

Selon une configuration, la première surface de contact 28 est solidaire de l'enceinte externe 22 et la deuxième surface de contact 30 est solidaire de l'enceinte interne 24.

Selon un mode de réalisation, le système de liaison 26 comprend un premier manchon 32 cylindrique relié à l'enceinte externe 22. Selon une configuration, le premier manchon 32 comprend une première extrémité reliée à l'enceinte externe 22 et une deuxième extrémité orientée vers l'enceinte interne 24, ladite première extrémité étant obturée par l'enceinte externe 22. Selon une autre configuration visible sur les figures 3 à 5, le premier manchon 32 traverse l'enceinte externe 22 et présente une première extrémité 32.1 ouverte, située à l'intérieur de l'enceinte externe 22 et orientée vers l'enceinte interne 24, ainsi qu'une deuxième extrémité 32.2 située à l'extérieur de l'enceinte externe 22. La deuxième extrémité 32.2 peut être ouverte ou fermée. Selon un agencement visible sur les figures 3 à 5, l'enceinte externe 22 et le premier manchon 32 forment une unique pièce réalisée d'un seul tenant. Selon un autre agencement, l'enceinte externe 22 et le premier manchon 32 sont deux pièces distinctes reliées par une liaison rigide.

En complément, le système de liaison 26 comprend un deuxième manchon 34 cylindrique qui présente une première extrémité 34.1 reliée à l'enceinte interne 24 et une deuxième extrémité 34.2 orientée vers l'enceinte externe 22. Selon une configuration, le deuxième manchon 34 et l'enceinte interne 24 forment une unique pièce réalisée d'un seul tenant. Selon une autre configuration, le deuxième manchon 34 et l'enceinte interne 24 sont deux pièces distinctes reliées par une liaison rigide 36 obtenue par collage, soudage ou grâce à des éléments de liaison comme des boulons ou des rivets par exemple. Cette liaison rigide 36 n'est pas plus décrite car elle peut être identique à celle de l'art antérieur.

Selon une configuration, les premier et deuxième manchons 32, 34 sont coaxiaux entre eux et à l'axe de déplacement DD, écartés l'un de l'autre de manière à délimiter un logement annulaire 38 entre eux. En complément, le système de liaison 26 comprend une bague 40 positionnée dans le logement annulaire 38 et intercalée entre les premier et deuxième manchons 32, 34 ; ladite bague 40 étant immobile par rapport à un premier élément parmi les premier et deuxième manchons 32, 34 et comportant la première surface de contact 28, un deuxième élément, différent du premier élément, parmi les premier et deuxième manchons 32, 34, comportant la deuxième surface de contact 30 en contact avec la première surface de contact 28.

Selon un mode de réalisation, le premier manchon 32 est un manchon femelle dans lequel est positionnée une partie du deuxième manchon 34 qui forme un manchon mâle. Selon ce mode de réalisation, le deuxième manchon 34 présente une surface extérieure S34, coaxiale à l'axe de déplacement DD, qui comporte une zone de contact adjacente à la deuxième extrémité 34.2, positionnée dans le premier manchon 32 et formant la deuxième surface de contact 30. La surface extérieure S34 présente un diamètre extérieur D34. Le premier manchon 32 présente une surface intérieure S32 comportant au moins un premier tronçon 42 cylindrique, coaxial à l'axe de déplacement DD, positionné autour du deuxième manchon 34 et présentant un diamètre intérieur D42. En complément, la bague 40 comprend une surface extérieure 44 cylindrique, coaxiale à l'axe de déplacement DD et de diamètre extérieur sensiblement égal au diamètre intérieur D42 du premier tronçon 42 du premier manchon 32, ainsi qu'une surface intérieure 46 formant la première surface de contact 28 en contact avec la zone de contact du deuxième manchon 30. Selon un agencement, la bague 40 comprend deux parois latérales 48, positionnées approximativement dans des plans transversaux, reliant les surfaces extérieure et intérieure 44, 46. En variante, les surfaces extérieure et intérieure 44, 46 pourraient être directement reliées entre elles. Quelle que soit la variante, la bague 40 s'étend entre deux plans transversaux et présente un plan de symétrie équidistant des plans transversaux.

Selon un mode de réalisation, les premier et deuxième manchons 32, 34 sont métalliques ou réalisés en matériau composite. La bague 40 est réalisée en matériau céramique ou en matériau métallique. La bague 40 est réalisée en un matériau présentant une dureté élevée supérieure à celle du matériau du deuxième manchon 34.

Selon un autre mode de réalisation, la bague 40 est métallique ou réalisée en matériau composite. Les premier et deuxième manchons 32, 34 sont réalisés en matériau céramique ou en matériau métallique. Le deuxième manchon 34 est réalisé en un matériau présentant une dureté élevée supérieure à celle du matériau de la bague 40.

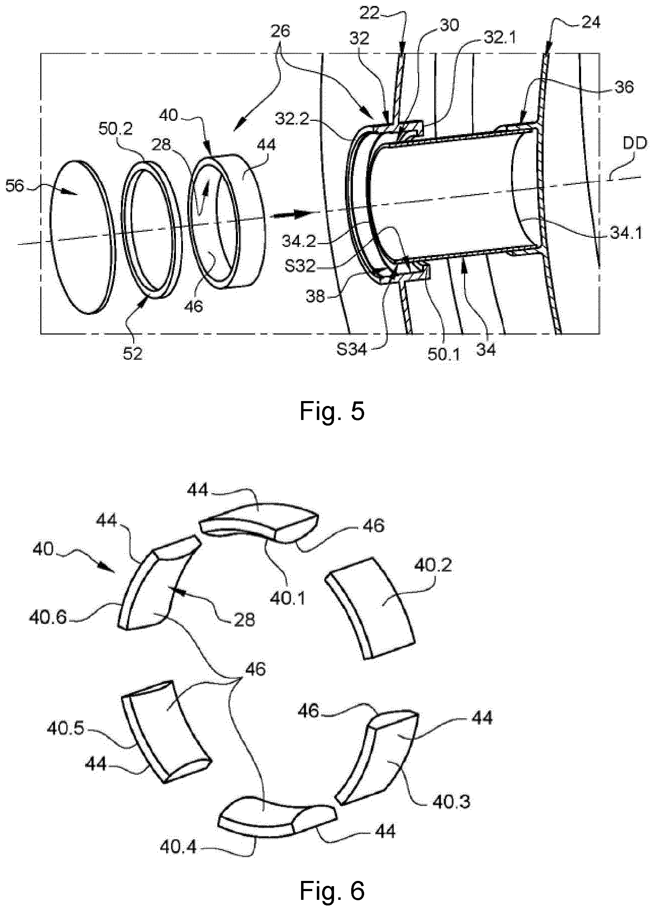

Selon une première configuration visible sur les figures 3 et 5, la bague 40 est continue et s'étend sur toute la circonférence du premier manchon 32. Selon une deuxième configuration visible sur la figure 6, la bague 40 est segmentée et comprend plusieurs tronçons 40.1 à 40.6 espacés entre eux et régulièrement répartis sur la circonférence du premier manchon 32. Cette deuxième configuration limite les transferts de chaleur entre la bague 40 et le deuxième manchon 34, ce qui permet d'améliorer les performances thermiques du réservoir.

Le système de liaison 26 comprend des première et deuxième butées 50.1, 50.2 reliées au premier manchon 32 et positionnées de part et d'autre de la bague 40 selon la direction longitudinale pour l'immobiliser en translation selon la direction longitudinale par rapport au premier manchon 32. La deuxième butée 50.2, celle la plus éloignée de l'enceinte interne 24, est démontable.

Selon un mode de réalisation, la première butée 50.1 est positionnée au niveau de la première extrémité 32.1 du premier manchon 32. Le premier manchon 32 et la première butée 50.1 forment une unique pièce réalisée d'un seul tenant. La première butée 50.1 correspond à une collerette intérieure présentant un diamètre intérieur inférieur à celui du diamètre intérieur D42 du premier tronçon 42. La deuxième butée 50.2 est un écrou 52 se vissant dans le premier manchon 32. A cet effet, le premier manchon 32 comprend un deuxième tronçon 54 taraudé, configuré pour permettre le vissage de l'écrou 52, qui s'étend entre la deuxième extrémité 32.2 et le premier tronçon 42 du premier manchon 32. Le deuxième tronçon 54 est coaxial au premier tronçon 42 et présente un diamètre supérieur à celui du premier tronçon 42.

Selon un mode de réalisation, le système de liaison 26 comprend un bouchon 56 configuré pour se positionner au niveau de la deuxième extrémité 32.2 du premier manchon 32 et occuper un état monté dans lequel le bouchon 56 obture la deuxième extrémité 32.2 du premier manchon 32 et un état démonté dans lequel le bouchon 56 dégage la deuxième extrémité 32.2 du premier manchon 32. Le bouchon 56 et la deuxième extrémité 32.2 du premier manchon 32 sont configurés pour maintenir le bouchon 56 à l'état monté.

Le fait de prévoir un premier manchon 32 qui débouche à l'extérieur de l'enceinte externe 22 permet d'accéder aux éléments du système de liaison 26 sans avoir besoin de démonter l'enceinte externe 22. A l'état monté, le bouchon 56 permet d'assurer l'étanchéité de la zone située entre les enceintes externe et interne 22, 24.

## Revendications

1. Réservoir comprenant une enceinte externe (22), une enceinte interne (24) positionnée dans l'enceinte externe (22) ainsi qu'au moins un système de liaison (26) reliant les enceintes externe et interne (22, 24) et leur permettant de se déplacer l'une par rapport à l'autre selon au moins une direction longitudinale parallèle à un axe de déplacement (DD) en fonctionnement, **caractérisé en ce que** le système de liaison (26) comprend une liaison linéaire annulaire comportant une première surface de contact (28) solidaire d'un premier élément parmi l'enceinte externe (22) et l'enceinte interne (24) ainsi qu'une deuxième surface de contact (30) solidaire d'un deuxième élément, différent du premier élément, parmi l'enceinte externe (22) et l'enceinte interne (24), les première et deuxième surfaces de contact (28, 30) étant disposées en vis-à-vis et configurées pour être en contact l'une avec l'autre le long d'un cercle de contact qui présente un centre (O) positionné sur l'axe de déplacement (DD).

2. Réservoir selon la revendication précédente, **caractérisé en ce que** la première surface de contact (28) présente des sections longitudinales constantes autour de l'axe de déplacement (DD) et des sections transversales qui augmentent ou diminuent en s'écartant d'un plan transversal passant par le centre (O) du cercle de contact et **en ce que** la deuxième surface de contact (30) est cylindrique et présente un axe de révolution confondu avec l'axe de déplacement (DD).

3. Réservoir selon la revendication précédente, **caractérisé en ce que** la première surface de contact (28) présente des sections transversales supérieures ou égales à celles de la deuxième surface de contact (30) et des sections transversales qui augmentent en s'écartant du plan transversal passant par le centre (O) du cercle de contact.

4. Réservoir selon l'une des revendications précédentes, **caractérisé en ce que** le système de liaison (26) comprend un premier manchon (32) cylindrique et relié à l'enceinte externe (22) ainsi qu'un deuxième manchon (34) cylindrique et relié à l'enceinte interne (24), les premier et deuxième manchons (32, 34) étant coaxiaux à l'axe de déplacement (DD) et écartés l'un de l'autre de manière à délimiter un logement annulaire (38) entre eux et **en ce que** le système de liaison (26) comprend une bague (40) positionnée dans le logement annulaire (38) et immobile par rapport à un premier élément parmi les premier et deuxième manchons (32, 34), la bague (40) comportant la première surface de contact (28), un deuxième élément différent du premier élément, parmi les premier et deuxième manchons (32, 34), comportant la deuxième surface de contact (30).

5. Réservoir selon la revendication précédente, **caractérisé en ce que** le deuxième manchon (34) présente une surface extérieure (S34), coaxiale à l'axe de déplacement (DD), qui comporte une zone positionnée dans le premier manchon (32), ladite zone formant la deuxième surface de contact (30) ; **en ce que** le premier manchon (32) présente une surface intérieure (S32) comportant au moins un premier tronçon (42) cylindrique, coaxial à l'axe de déplacement (DD), positionné autour du deuxième manchon (34) et présentant un diamètre intérieur (D42) et **en ce que** la bague (40) comprend une surface extérieure (44) cylindrique, de diamètre extérieur sensiblement égal au diamètre intérieur (D42) du premier tronçon (42) du premier manchon (32), ainsi qu'une surface intérieure (46) formant la première surface de contact (28).

6. Réservoir selon la revendication précédente, **caractérisé en ce que** le système de liaison (26) comprend des première et deuxième butées (50.1, 50.2) reliées au premier manchon (32) et positionnées de part et d'autre de la bague (40) selon la direction longitudinale pour l'immobiliser en translation selon la direction longitudinale par rapport au premier manchon (32).

7. Réservoir selon la revendication précédente, **caractérisé en ce que** la deuxième butée (50.2), la plus éloignée de l'enceinte interne (24), est démontable.

8. Réservoir selon l'une des revendications 4 à 7, **caractérisé en ce que** la bague (40) s'étend entre deux plans transversaux et présente un plan de symétrie équidistant des plans transversaux.

9. Réservoir selon l'une des revendications 4 à 8, **caractérisé en ce que** le premier manchon (32) traverse l'enceinte externe (22) et présente une première extrémité (32.1) ouverte et située à l'intérieur de l'enceinte externe (22) ainsi qu'une deuxième extrémité (32.2) ouverte et située à l'extérieur de l'enceinte externe (22).

10. Réservoir selon la revendication précédente, **caractérisé en ce que** le système de liaison (26) comprend un bouchon (56) configuré pour se positionner au niveau de la deuxième extrémité (32.2) du premier manchon (32) et occuper un état monté dans lequel le bouchon (56) obture la deuxième extrémité (32.2) du premier manchon (32) et un état démonté dans lequel le bouchon (56) dégage la deuxième extrémité (32.2) du premier manchon (32).

## Patentansprüche

1. Tank, der einen Außenbehälter (22), einen Innenbehälter (24), der in dem Außenbehälter (22) positioniert ist, sowie mindestens ein Verbindungssystem (26), das den Außen- und Innenbehälter (22, 24) verbindet und ihnen gestattet, sich im Betrieb entlang mindestens einer Längsrichtung, die zu einer Verschiebungsachse (DD) parallel ist, in Bezug zueinander zu verschieben, beinhaltet, **dadurch gekennzeichnet, dass** das Verbindungssystem (26) eine ringförmige lineare Verbindung beinhaltet, die eine erste Kontaktfläche (28), die mit einem ersten Element von dem Außenbehälter (22) und dem Innenbehälter (24) fest verbunden ist, sowie eine zweite Kontaktfläche (30), die mit einem zweiten Element, das sich von dem ersten Element unterscheidet, von dem Außenbehälter (22) und dem Innenbehälter (24) fest verbunden ist, umfasst, wobei die erste und zweite Kontaktfläche (28, 30) gegenüberliegend angeordnet sind und dazu konfiguriert sind, entlang eines Kontaktkreises, der eine Mitte (O) aufweist, die auf der Verschiebungsachse (DD) positioniert ist, miteinander in Kontakt zu sein.

2. Tank nach dem vorhergehenden Anspruch, **dadurch gekennzeichnet, dass** die erste Kontaktfläche (28) konstante Längsschnitte um die Verschiebungsachse (DD) und Querschnitte, die sich mit zunehmendem Abstand von einer Querebene, die durch die Mitte (O) des Kontaktkreises verläuft, vergrößern oder verkleinern, aufweist und dass die zweite Kontaktfläche (30) zylindrisch ist und eine Drehachse aufweist, die mit der Verschiebungsachse (DD) zusammenfällt.

3. Tank nach dem vorhergehenden Anspruch, **dadurch gekennzeichnet, dass** die erste Kontaktfläche (28) Querschnitte, die größer als oder gleich denjenigen der zweiten Kontaktfläche (30) sind, und Querschnitte, die sich mit zunehmendem Abstand von der Querebene, die durch die Mitte (O) des Kontaktkreises verläuft, vergrößern, aufweist.

4. Tank nach einem der vorhergehenden Ansprüche, **dadurch gekennzeichnet, dass** das Verbindungssystem (26) eine erste zylindrische Hülse (32), die mit dem Außenbehälter (22) verbunden ist, sowie eine zweite zylindrische Hülse (34), die mit dem Innenbehälter (24) verbunden ist, beinhaltet, wobei die erste und zweite Hülse (32, 34) zu der Verschiebungsachse (DD) koaxial sind und voneinander beabstandet sind, um zwischen sich eine ringförmige Aufnahme (38) zu begrenzen, und dass das Verbindungssystem (26) einen Ring (40) beinhaltet, der in der ringförmigen Aufnahme (38) positioniert ist und in Bezug auf ein erstes Element von der ersten und zweiten Hülse (32, 34) unbeweglich ist, wobei der Ring (40) die erste Kontaktfläche (28) umfasst, wobei ein zweites Element, das sich von dem ersten Element unterscheidet, von der ersten und zweiten Hülse (32, 34) die zweite Kontaktfläche (30) umfasst.

5. Tank nach dem vorhergehenden Anspruch, **dadurch gekennzeichnet, dass** die zweite Hülse (34) eine zu der Verschiebungsachse (DD) koaxiale Außenfläche (S34) aufweist, die einen Bereich umfasst, der in der ersten Hülse (32) positioniert ist, wobei der Bereich die zweite Kontaktfläche (30) bildet; dass die erste Hülse (32) eine Innenfläche (S32) aufweist, die mindestens einen zu der Verschiebungsachse (DD) koaxialen ersten zylindrischen Abschnitt (42) umfasst, der um die zweite Hülse (34) herum positioniert ist und einen Innendurchmesser (D42) aufweist, und dass der Ring (40) eine zylindrische Außenfläche (44) mit einem Außendurchmesser, der im Wesentlichen gleich dem Innendurchmesser (D42) des ersten Abschnitts (42) der ersten Hülse (32) ist, sowie eine Innenfläche (46), die die erste Kontaktfläche (28) bildet, beinhaltet.

6. Tank nach dem vorhergehenden Anspruch, **dadurch gekennzeichnet, dass** das Verbindungssystem (26) einen ersten und zweiten Anschlag (50.1, 50.2) beinhaltet, die mit der ersten Hülse (32) verbunden sind und entlang der Längsrichtung zu beiden Seiten des Rings (40) positioniert sind, um diesen entlang der Längsrichtung in Bezug auf die erste Hülse (32) translatorisch zu blockieren.

7. Tank nach dem vorhergehenden Anspruch, **dadurch gekennzeichnet, dass** der zweite Anschlag (50.2), der von dem Innenbehälter (24) am weitesten entfernt ist, demontierbar ist.

8. Tank nach einem der Ansprüche 4 bis 7, **dadurch gekennzeichnet, dass** sich der Ring (40) zwischen zwei Querebenen erstreckt und eine Symmetrieebene aufweist, die von den Querebenen gleich weit entfernt ist.

9. Tank nach einem der Ansprüche 4 bis 8, **dadurch gekennzeichnet, dass** die erste Hülse (32) den Außenbehälter (22) durchquert und ein erstes offenes Ende (32.1), das sich im Inneren des Außenbehälters (22) befindet, sowie ein zweites offenes Ende (32.2), das sich außerhalb des Außenbehälters (22) befindet, aufweist.

10. Tank nach dem vorhergehenden Anspruch, **dadurch gekennzeichnet, dass** das Verbindungssystem (26) einen Stopfen (56) beinhaltet, der dazu konfiguriert ist, am zweiten Ende (32.2) der ersten Hülse (32) positioniert zu werden und einen montierten Zustand, in dem der Stopfen (56) das zweite Ende (32.2) der ersten Hülse (32) verschließt, und einen demontierten Zustand, in dem der Stopfen (56) das zweite Ende (32.2) der ersten Hülse (32) freilegt, einzunehmen.

## Claims

1. Tank comprising an external enclosure (22), an internal enclosure (24) positioned inside the external enclosure (22) and at least one connection system (26) connecting the external and internal enclosures (22, 24) and enabling them to move in relation to one another in at least one longitudinal direction parallel to an axis of displacement (DD) when in operation, **characterized in that** the connection system (26) comprises an annular linear connection having a first contact surface (28) rigidly connected to a first element that is either the external enclosure (22) or the internal enclosure (24) as well as a second contact surface (30) rigidly connected to a second element that is different from the first element and that is either the external enclosure (22) or the internal enclosure (24), the first and second contact surfaces (28, 30) being arranged opposite one another and designed to be in contact with one another along a contact circle that has a centre (O) positioned on the axis of displacement (DD).

2. Tank according to the preceding claim, **characterized in that** the first contact surface (28) has constant longitudinal sections about the axis of displacement (DD) and transverse sections that increase or decrease away from a transverse plane passing through the centre (O) of the contact circle, and **in that** the second contact surface (30) is cylindrical and has an axis of revolution coincident with the axis of displacement (DD).

3. Tank according to the preceding claim, **characterized in that** the first contact surface (28) has transverse sections equal to or greater than the transverse sections of the second contact surface (30) and transverse sections that increase away from the transverse plane passing through the centre (O) of the contact circle.

4. Tank according to one of the preceding claims, **characterized in that** the connection system (26) comprises a first cylindrical sleeve (32) that is connected to the external enclosure (22) and a second cylindrical sleeve (34) that is connected to the internal enclosure (24), the first and second sleeves (32, 34) being coaxial with the axis of displacement (DD) and spaced apart from one another such as to delimit an annular seat (38) therebetween, and **in that** the connection system (26) comprises a ring (40) that is positioned in the annular seat (38) and that is stationary in relation to a first element that is the first or second sleeve (32, 34), the ring (40) including the first contact surface (28), a second element different from the first element, which is the first or second sleeve (32, 34), including the second contact surface (30).

5. Tank according to the preceding claim, **characterized in that** the second sleeve (34) has an external surface (S34) that is coaxial with the axis of displacement (DD), that includes a zone positioned in the first sleeve (32), said zone forming the second contact surface (30); **in that** the first sleeve (32) has an internal surface (S32) including at least a first cylindrical portion (42), coaxial with the axis of displacement (DD), positioned about the second sleeve (34) and having an internal diameter (D42), and **in that** the ring (40) comprises an external cylindrical surface (44) having an external diameter substantially equal to the internal diameter (D42) of the first portion (42) of the first sleeve (32), as well as an internal surface (46) forming the first contact surface (28).

6. Tank according to the preceding claim, **characterized in that** the connection system (26) comprises first and second stops (50.1, 50.2) connected to the first sleeve (32) and positioned on both sides of the ring (40) in the longitudinal direction to prevent the translational movement thereof in the longitudinal direction in relation to the first sleeve (32).

7. Tank according to the preceding claim, **characterized in that** the second stop (50.2), which is furthest away from the internal enclosure (24), is removable.

8. Tank according to one of Claims 4 to 7, **characterized in that** the ring (40) extends between two transverse planes and has a plane of symmetry equidistant from the transverse planes.

9. Tank according to one of Claims 4 to 8, **characterized in that** the first sleeve (32) traverses the external enclosure (22) and has a first open end (32.1) that is located inside the external enclosure (22) and a second open end (32.2) that is located outside the external enclosure (22).

10. Tank according to the preceding claim, **characterized in that** the connection system (26) comprises a stopper (56) designed to be positioned at the second end (32.2) of the first sleeve (32) and to be in a mounted state in which the stopper (56) plugs the second end (32.2) of the first sleeve (32) and in a disassembled state in which the stopper (56) leaves the second end (32.2) of the first sleeve (32) open.
